# EUROPEAN PATENT APPLICATION

(11) **EP 4 752 426 A1**
(43) Date of publication of application: **03.06.2026**
(21) Application number: 25217893.4
(22) Date of filing: 24.11.2025
(51) Int. Cl.: F16P 3/14, G08B 13/196, H04N 23/11, B65G 15/00

(54) **AUTOMATED DETECTION OF HUMAN INTRUSION IN SHUTTLE-CONVEYOR-BASED MATERIAL HANDLING ARRANGEMENTS IN WAREHOUSE OPERATIONS**

(30) Priority: 27.11.2024 US 202463725729 P
(71) Applicant: Grey Orange Inc., Suwanee, GA 30024 (US)
(72) Inventor: Pallapathula, Satish, Alpharetta, 30004 (US)
(74) Representative: Nirwan, Prajwal

(57) **Abstract**

A system (100) for automated detection of a human intrusion in a shuttle-conveyor-based material handling arrangement (102) in warehouse operations comprising bi-spectrum cameras (104a, 104b) arranged in pairs of bi-spectrum cameras in a manner that an overlapping field of view (106) of bi-spectrum cameras of each pair comprises an operational area (108) of a conveyor (110) from amongst conveyors, each bi-spectrum camera comprises a thermal imaging channel and an optical imaging channel; a safety controller (112); and processor(s) (116) is/are configured to: obtain thermal imaging data and optical imaging data corresponding to the operational area; analyse the thermal imaging data and the optical imaging data to detect a presence of a human in the operational area; generate a control signal to temporarily cease an operation of said arrangement; and send the control signal to the safety controller.

## Description

### TECHNICAL FIELD

The present disclosure relates to systems for automated detection of human intrusions in shuttle-conveyor-based material handling arrangements in warehouse operations. The present disclosure also relates to methods for automated detection of human intrusions in shuttle-conveyor-based material handling arrangements in warehouse operations.

### BACKGROUND

Automated warehouses and shuttle-conveyor arrangements have become central to modern supply chains, enabling high-speed handling of packages in dense storage environments. In these arrangements, conveyor belts and shuttle gantries operate continuously to transfer goods with precision and efficiency. Human operators, however, often remain present nearby for supervision, maintenance, or troubleshooting tasks. This interaction between high-speed automated conveyor and the human operators creates safety concerns, particularly where there is a risk of crawling, leaning, or unintended entry into restricted areas of the conveyor, thereby causing potential hazards.

Traditional technologies have attempted to address such potential hazards by using, for example, such as mechanical fences and signage, often combined with operator training. However, the mechanical fences and the signage are rigid and in-effective against deliberate or accidental intrusions, leaving safety reliant on human compliance. Moreover, light curtains are another solution which utilise projection of light beams across an area of the conveyor in order to detect the human intrusion. However, the light curtains struggle in environments with variable sizes of the packages, and often cause false triggers, thereby making them impractical and cost-prohibitive for complex layouts of the conveyor. Furthermore, safety radar and lidar scanners offer contactless detection of the human intrusion around the conveyor, but their reliance online-of-sight makes them vulnerable to blind spots and interference from packages that are moving, leading to reduced reliability. Overall, the traditional technologies fail to provide real-time human intrusion detection, leading to delays in halting automation when a hazard is detected. These delays can result in serious accidents or damage in high-speed automated conveyors.

Therefore, in light of the foregoing discussion, there exists a need to overcome the aforementioned drawbacks.

### SUMMARY

The aim of the present disclosure is to provide a system and a method that enable real time, automatic, reliable, and fail-safe detection of human intrusion in a shuttle-conveyor-based material handling arrangement in warehouse operations. This facilitates in temporarily ceasing an operation of the shuttle-conveyor-based material handling arrangement to avoid any potential hazards. The aim of the present disclosure is achieved by a system and a method for automated detection of human intrusion in a shuttle-conveyor-based material handling arrangement, as defined in the appended independent claims to which reference is made to. Advantageous features are set out in the appended dependent claims.

In a first aspect, an embodiment of the present disclosure provides a system for automated detection of human intrusion in a shuttle-conveyor-based material handling arrangement in warehouse operations, the shuttle-conveyor-based material handling arrangement comprising a plurality of conveyors, the system comprising:
a plurality of bi-spectrum cameras arranged in pairs of bi-spectrum cameras in a manner that an overlapping field of view of bi-spectrum cameras of each pair comprises a given operational area of a given conveyor from amongst the plurality of conveyors, wherein a given bi-spectrum camera from amongst the plurality of bi-spectrum cameras comprises a thermal imaging channel and an optical imaging channel;
a safety controller operatively coupled to the shuttle-conveyor-based material handling arrangement; and
at least one processor communicably coupled to the plurality of bi-spectrum cameras and the safety controller, wherein the at least one processor is configured to:
   obtain thermal imaging data and optical imaging data corresponding to the given operational area, from each individual one of bi-spectrum cameras of said pair;
   analyse the thermal imaging data and the optical imaging data obtained from each individual one of the bi-spectrum cameras of said pair, to detect a presence of a human in the given operational area;
   generate a control signal to temporarily cease an operation of the shuttle-conveyor-based material handling arrangement, upon detecting the presence of the human in the given operational area; and
   send the control signal to the safety controller.

Optionally, when analysing the thermal imaging data and the optical imaging data, the at least one processor is configured to:
for each individual one of the bi-spectrum cameras of said pair, correlate the thermal imaging data and the optical imaging data to detect the presence of the human in the given operational area; and
cross-verify detections corresponding to each individual one of the bi-spectrum cameras of said pair, to confirm the presence of the human in the given operational area.

Optionally, at least one reference marker is arranged at the given operational area, wherein the at least one processor is configured to:
obtain at least one image of the given operational area captured using each individual one of the bi-spectrum cameras of said pair, in a first pre-defined time interval;
for each individual one of the bi-spectrum cameras, detect a position of the at least one reference marker in the at least one image; and
verify that the overlapping field of view of bi-spectrum cameras comprises the given operational area, based on positions of the at least one reference marker in respective images corresponding to each individual one of the bi-spectrum cameras.

Optionally, the at least one processor is configured to perform the step of obtaining the thermal imaging data and the optical imaging data, the step of analysing the thermal imaging data and the optical imaging data, the step of generating the control signal, and the step of sending the control signal, in a second pre-defined time interval.

Optionally, the at least one processor is configured to send information pertaining to system health to the safety controller, along with the control signal, wherein said information comprises at least one of:
(i) an operational condition of each individual one of the bi-spectrum cameras of said pair,
(ii) a power-drop condition detected by an industrial network switch supplying a power to the plurality of bi-spectrum cameras,
(iii) a communication-link status indicating an availability of a communication path between the at least one processor and the safety controller,
(iv) an alignment status indicating verification that the overlapping field of view of the bi-spectrum cameras comprises the given operational area.

Optionally, the at least one processor is communicably coupled to the safety controller via a communication adaptor.

Optionally, the system further comprises an industrial network switch having a primary power input, a standby power input, and a relay output, wherein the primary power input is connectable to a primary power source, and the standby power input is connectable to a standby power source, and
wherein the industrial network switch is configured to perform at least one of: (i) receiving an operating power from the primary power input during a normal operation of the system, (ii) receiving the operating power from the standby power input, upon occurrence of a power-drop condition or a power-failure condition at the primary power input, wherein the relay output is configured to report the power-drop condition or the power-failure condition to the safety controller.

Optionally, the industrial network switch is configured to provide a Power-over-Ethernet (PoE) supply to the plurality of bi-spectrum cameras, and to maintain the Power-over-Ethernet supply to the plurality of bi-spectrum cameras upon occurrence of a power failure at any one of: the primary power input, the standby power input.

Optionally, when analysing the thermal imaging data and the optical imaging data, the at least one processor is configured to restrict detection of the presence of the human within at least one region of interest within the given operational area of the given conveyor, by analysing the thermal imaging data and the optical imaging data that correspond to the at least one region of interest.

Optionally, the at least one region of interest has a polygonal shape, and wherein the at least one region of interest is configurable by a user via an interactive user interface provided at a display.

Optionally, the at least one processor is configured to:
obtain, from the given bi-spectrum camera, at least one image representing at least one of: a detection of the presence of the human in the given operational area, a manual intervention in the shuttle-conveyor-based material handling arrangement;
store the at least one image in a data repository for a pre-determined retention period; and
upon an expiry of the pre-determined retention period, overwrite at least one previously-stored image with at least one recently-obtained image according to a first-in-first-out (FIFO) policy.

Optionally, the shuttle-conveyor-based material handling arrangement comprises a shuttle station having an X-Y gantry, wherein when temporarily ceasing the operation of the shuttle-conveyor-based material handling arrangement, the safety controller is configured to stop movements of both the X-Y gantry and the plurality of conveyors, in response to the control signal.

Optionally, at least one processor is configured to display, on an interactive user interface provided at a display, at least one of:
(i) a live status of the shuttle-conveyor-based material handling arrangement and the plurality of bi-spectrum cameras,
(ii) error notifications pertaining to operations of the given bi-spectrum camera and the safety controller,
(iii) stored images and/or videos corresponding to a detection of the presence of the human in the given operational area or a manual intervention in the shuttle-conveyor-based material handling arrangement,
(iv) multi-level access controls to different users for performing different tasks associated with the system.

Optionally, the safety controller is certified to Performance Level (PL) D, Category 2.

In a second aspect, an embodiment of the present disclosure provides a method for automated detection of human intrusion in a shuttle-conveyor-based material handling arrangement in warehouse operations, the shuttle-conveyor-based material handling arrangement comprising a plurality of conveyors, the method comprising:
obtaining thermal imaging data and optical imaging data corresponding to a given operational area of a given conveyor from amongst the plurality of conveyors, from each individual one of bi-spectrum cameras of a pair from amongst pairs of a plurality of bi-spectrum cameras, wherein the bi-spectrum cameras of said pair are arranged in a manner that an overlapping field of view of the bi-spectrum cameras comprises the given operational area, and wherein a given bi-spectrum camera from amongst the plurality of bi-spectrum cameras comprises a thermal imaging channel and an optical imaging channel;
analysing the thermal imaging data and the optical imaging data obtained from each individual one of the bi-spectrum cameras of said pair, to detect a presence of a human in the given operational area;
generating a control signal to temporarily cease an operation of the shuttle-conveyor-based material handling arrangement, upon detecting the presence of the human in the given operational area; and
sending the control signal to a safety controller operatively coupled to the shuttle-conveyor-based material handling arrangement.

Throughout the description and claims of this specification, the words *"comprise", "include", "have",* and *"contain"* and variations of these words, for example *"comprising"* and *"comprises",* mean *"including but not limited to",* and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIG. 1 illustrates an exemplary scenario where a system for automated detection of human intrusion in a shuttle-conveyor-based material handling arrangement in warehouse operations is in use, in accordance with an embodiment of the present disclosure; and
FIG. 2 illustrates steps of a method for automated detection of human intrusion in a shuttle-conveyor-based material handling arrangement in warehouse operations, in accordance with an embodiment of the present disclosure.

### DETAILED DESCRIPTION

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

The present disclosure provides a system for automated detection of human intrusion in a shuttle-conveyor-based material handling arrangement in warehouse operations, which enables real-time, reliable, and fail-safe monitoring of a given operational area (of a given conveyor) which is potentially hazardous. This is achieved by employing a plurality of bi-spectrum cameras arranged in pairs of bi-spectrum cameras with an overlapping field of view of bi-spectrum cameras of each pair comprises the given operational area of the given conveyor. Further, at least one processor is configured to obtain and analyse thermal imaging data and optical imaging data from each individual one of bi-spectrum cameras of the pairs of bi-spectrum cameras. This ensures high accuracy of the automated detection of human intrusion in the shuttle-conveyor-based material handling arrangement while avoiding a false detection of the human intrusion, that may otherwise occur due to lighting variations, hot objects, or environmental disturbances, in the warehouse operations. Once the human intrusion in the given operational area is detected, the at least one processor generates a control signal and sends it to a safety controller operatively coupled to the shuttle-conveyor-based material handling arrangement, which automatically ceases operations of the shuttle-conveyor-based material handling arrangement. This ensures that accident prevention and operator safety are achieved proactively, without dependence on manual intervention or passive protective measures, thereby enhancing both safety reliability and operational efficiency in the warehouse operations. This may, particularly, be beneficial when a human enters to the given operational area when packages becomes stuck on the given conveyor due to misalignment, irregular shape, or a jam caused by overlapping of the packages. When the packages are positioned improperly, it might obstruct a flow of subsequent packages, causing delays or halting the given conveyor entirely. However, the aforementioned system eliminates a risk of accidental collisions or injuries caused by automated components, such as the shuttle-conveyor-based material handling arrangement, attempting to pick or place the packages while the human is still in the area.

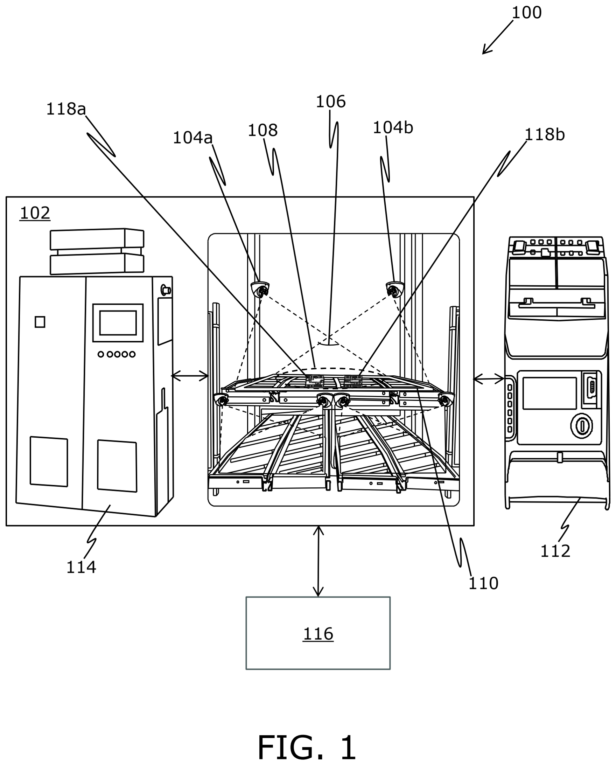

Referring to FIG. 1, illustrated is an exemplary scenario where a system **100** for automated detection of human intrusion in a shuttle-conveyor-based material handling arrangement **102** in warehouse operations is in use, in accordance with an embodiment of the present disclosure. The shuttle-conveyor-based material handling arrangement **102** comprises a plurality of conveyors. The system **100** comprises:
a plurality of bi-spectrum cameras **104a** and **104b** arranged in pairs of bi-spectrum cameras in a manner that an overlapping field of view **106** of bi-spectrum cameras of each pair comprises a given operational area **108** of a given conveyor **110** from amongst the plurality of conveyors, wherein a given bi-spectrum camera from amongst the plurality of bi-spectrum cameras **104a** and **104b** comprises a thermal imaging channel and an optical imaging channel;
a safety controller **112** operatively coupled to the shuttle-conveyor-based material handling arrangement **102;** and
at least one processor (for example, depicted as a processor **116)** communicably coupled to the plurality of bi-spectrum cameras **104a** and **104b** and the safety controller **112,** wherein the at least one processor **116** is configured to:
   obtain thermal imaging data and optical imaging data corresponding to the given operational area **108,** from each individual one of bi-spectrum cameras of said pair;
   analyse the thermal imaging data and the optical imaging data obtained from each individual one of the bi-spectrum cameras of said pair, to detect a presence of a human in the given operational area **108;**
   generate a control signal to temporarily cease an operation of the shuttle-conveyor-based material handling arrangement **102,** upon detecting the presence of the human in the given operational area **108;** and
   send the control signal to the safety controller **112.**

Throughout the present disclosure the term *"shuttle-conveyor-based material handling arrangement "* refers to a material-handling installation typically employed in automated warehouses, where at least one shuttle station (for example, a shuttle station **114)** is positioned in association with the plurality of conveyors to facilitate movement of the packages. Typically, the shuttle station **114** comprises an X-Y gantry mechanism or any other type of a transport mechanism that transfers the packages amongst different conveyors, enabling flexible routing and storage of the packages within the automated warehouses.

The plurality of conveyors refers to two or more mechanical unit incorporated into the shuttle-conveyor-based material handling arrangement **102,** that transport goods along pre-defined paths within the shuttle-conveyor-based material handling arrangement **102.** The given conveyor **110** amongst the plurality of conveyors typically comprises a conveyor belt or an equivalent mechanism driven by at least one motor. The plurality of conveyors are positioned in a manner that the packages are fed to or removed from the shuttle-conveyor-based material handling arrangement **102.** This ensures efficient integration between automated transfer (by the shuttle station **114)** of the packages and material circulation in a warehouse. Moreover, this maintains a continuous flow of the packages and are considered operational areas where the human intrusion could pose safety hazards.

Throughout the present disclosure, the term *"bi-spectrum camera"* refers to a device that is capable of capturing at least one image of the given operational area **108** of the given conveyor **110** through the thermal imaging channel and the optical imaging channel. It will be appreciated that the plurality of bi-spectrum cameras **104a** and **104b** are arranged in the pairs of the bi-spectrum cameras such that the given bi-spectrum camera of said pairs monitor the given operational area **108** of the given conveyor **110.** The given bi-spectrum camera in said pairs acts redundantly, ensuring that even if one bi-spectrum camera fails, the other bi-spectrum camera continues monitoring. This redundancy guarantees uninterrupted detection of the human intrusion in the shuttle-conveyor-based material handling arrangement **102.** In practice, one bi-spectrum camera (in said pair of the bi-spectrum cameras) is mounted on a left-hand side of the given conveyor **110** and the other bi-spectrum camera is mounted on a right side of the given conveyor **110,** in order to eliminate any blind spots. Optionally, in an implementation, the plurality of bi-spectrum cameras **104a** and **104b** comprises twelve bi-spectrum cameras for the shuttle station **114,** wherein six bi-spectrum cameras are arranged a first side of the plurality of conveyors, and remaining six bi-spectrum cameras are arranged on a second side of the plurality of conveyors.

Throughout the present disclosure the term *"overlapping field of view"* refers to a portion of the operational area that is covered simultaneously by the pairs of the bi-spectrum cameras. The overlapping field of view **106** eliminates blind spots on the given operational area **108** and ensures that the human presence in the operational area is captured from at least two perspectives, enhancing detection reliability.

Throughout the present disclosure the term *"thermal imaging channel"* refers to an imaging channel of the given bi-spectrum camera that captures thermal radiation emitted as heat from the packages on the given conveyor **110** or heat from the human present nearby to the given conveyor **110.** The thermal imaging channel detects heat signals corresponding to temperature (typically, in a range of 36 degree Celsius to 38 degree Celsius) of a human body, enabling reliable identification of the human even in poor lighting or visually cluttered environments. The thermal imaging channel enables the system **100** to identify the human based on their heat patterns, distinguishing them from inanimate objects that lack corresponding thermal characteristics as of the human.

Throughout the present disclosure the term *"optical imaging channel"* refers to an imaging channel of the given bi-spectrum camera that captures at least visible-light information of the operational area. It will be appreciated that the optical image channel records visual information such as a shape, a colour, and a size of objects under normal lighting conditions. The optical image channel complements the thermal imaging channel by enabling contextual analysis for, for example, confirming that a heat signature corresponds to a human body shape, and by supporting detection of the human intrusion in well-lit conditions in the warehouse operations.

Throughout the present disclosure the term *"safety controller"* refers to an industrial-grade control unit configured to receive the control signals from the at least one processor **116** to execute corresponding safety actions on the shuttle-conveyor-based material handling arrangement **102.** It will be appreciated that the safety controller **112** is implemented as a programmable logic controller (PLC) specifically designed for the automated detection of the human intrusion in the shuttle-conveyor-based material handling arrangement **102** in the warehouse operations. The safety controller **112** continuously exchanges operational data with detection sub-system and supervises the shuttle-conveyor-based material handling arrangement **102** to ensure that any hazardous condition, such as the human intrusion into the operational area, results in immediate cessation of mechanical movement of the given conveyor **110.** Therefore, the safety controller **112** acts as an execution layer of a safety function of the system **100,** ensuring that a hazard detection is translated into physical action in real time and that the shuttle-conveyor-based material handling arrangement **102** transitions to a fail-safe mode under unsafe or uncertain conditions.

Throughout the present disclosure, the term *"processor"* refers to a computational unit that coordinates communication between the plurality of bi-spectrum cameras **104a** and **104b** and the safety controller **112,** executing all detection and control tasks in real time. Notably, the at least one processor **116** controls an overall operation of the system **100.** In this regard, the at least one processor **116** obtains the thermal imaging data and the optical imaging data from the each individual one of the bi-spectrum cameras. This can be achieved through a structured polling mechanism in which image frame acquisition of the each individual one of the bi-spectrum cameras is time-synchronised by the at least one processor **116** to maintain spatial consistency between the thermal imaging data and the optical imaging data. For example, when an each individual one of pair of bi-spectrum cameras covering the same operational area captures an image frame at a specific instant, the at least one processor **116** simultaneously retrieves corresponding the thermal imaging data and the optical imaging data, aligning them in a memory based on pre-calibrated geometric parameters. This ensures that both the thermal imaging data and the optical imaging data correspond to the given operational area **108** from a two different spectral perspective. Further, the thermal imaging data and the optical imaging data are optionally tagged with camera identifiers and timestamps to enable frame correlation and sequential analysis. In this regard, the at least one processor **116** maintains separate but linked buffers for the thermal imaging data and the optical imaging data, allowing efficient frame-by-frame comparison and minimising latency between data acquisition and subsequent analysis.

When analysing the thermal imaging data and the optical imaging data, the at least one processor **116** may execute a sequence of real-time computational steps designed to distinguish between human signatures and non-human heat or the packages within the shuttle-conveyor-based material handling arrangement **102.** The thermal imaging data provides a temperature-based map of the given operational area **108,** where each pixel corresponds to an emitted heat intensity. The at least one processor **116** processes the thermal imaging data to identify temperature clusters that fall within a typical human body temperature range (for example within a temperature range of 36 degree Celsius to 38 degree Celsius), thereby isolating regions likely to correspond to human presence. On the other hand, the optical imaging data provided contextual visual cues such as a shape, a motion pattern, and an outline of the packages. It will be appreciated that the at least one processor **116** may also apply image recognition algorithms and contour extraction algorithms to the optical imaging data to determine if any object within the operational data resembles a human form or posture.

Further, the at least one processor **116** then performs a comparative correlation between the thermal imaging data and the optical imaging data at a same time instant. This comparison allows to confirm that the detected heat pattern coincides spatially with a corresponding human-like visual contour. For example, when the thermal imaging channel shows a 37 degree Celsius heat zone and the optical imaging channel simultaneously reveals a standing or crouched figure in same coordinates, the at least one processor **116** recognises this as a confirmed human detection. Conversely, when a heat signature is found without any matching shape in the optical imaging data (such as a heated box or a motor), the at least one processor **116** identifies it as a non-human entity.

Such a dual-channel (referred herein as the thermal imaging channel and the optical imaging channel) analysis substantially enhances accuracy by eliminating false positives caused by hot machinery, lighting effects, or friction from the packages. The at least one processor **116** continuously repeats this analysis at a frame rate of the given bi-spectrum camera (for example, 30 frames per second), ensuring that any human entering or moving within the operational area is detected instantly. The analysis routine is optimised to operate within milliseconds per frame, enabling a real-time or near-real-time safety response.

Throughout the present disclosure the term *"control signal"* refers to an electronic command transmitted by the at least one processor **116** to the safety controller **112** to enforce a specific safety action, such as temporarily ceasing the operation of the shuttle-conveyor-based material handling arrangement **102.** For example, the control signal may be a 24-Volt Direct Current (VDC) signal. The control signal instructs the safety controller **112** to immediately stop motion of the given conveyor **110.** Notably, upon detection of the presence of the human in the given operational area **108,** the at least one processor **116** instantaneously generates the control signal to temporarily cease the operation of the shuttle-conveyor-based material handling arrangement **102.** It will be appreciated that the control signal may be generated by the at least one processor **116** into a routine package. The routine package includes a series of decisions into a standardised communication protocol format and dispatches it through a dedicated connection to the safety controller **112.** The routine package ensures fail-safe reliability, i.e., the control signal is generated by the at least one processor **116** only after verification thresholds are met, preventing false temporarily ceasing the operation of the shuttle-conveyor-based material handling arrangement **102,** yet it is guaranteed to execute when an actual presence of the human is detected.

Notably, the at least one processor **116** sends the generated control signal to the safety controller **112,** for example, via an industrial communication interface. This step ensures that a safety action such as temporarily ceasing the operation of the shuttle-conveyor-based material handling arrangement **102** is executed instantly and reliably. It will be appreciated that sending the control signal to the safety controller **112** by the at least one processor **116** is designed for low-latency propagation, typically occurring within milliseconds after the detection of the presence of the human, thereby ensuring real-time hazard mitigation. An ability of the at least one processor **116** to send the control signal to the safety controller **112** bridges a gap between intelligent detection (of the presence of the human) and mechanical control (temporarily ceasing the operation of the shuttle-conveyor-based material handling arrangement **102),** ensuring that safety interventions occur without human delay or dependency. This not only minimises risk but also ensures compliance with industrial safety protocols that require autonomous system-level responses to the human intrusion.

Optionally, the at least one processor **116** is integrated within the given bi-spectrum camera. In this regard, the at least one processor **116** can be understood to be implemented as an in-built software, firmware, hardware, or a combination thereof, within the given bi-spectrum camera in order to execute the aforementioned processing steps, as described earlier with reference to FIG. 1. In an example, the in-built firmware may be configured to analyse the thermal imaging data (as captured by the given bi-spectrum camera), to detect a temperature value within the given operational area **108** and to check whether or not the temperature value exceeds a pre-defined threshold temperature value. When the temperature value exceeds the pre-defined threshold temperature value, the in-built firmware may be configured to generate the control signal and send the control signal directly to the safety controller **112** (for example, through a dedicated communication interface). Upon receiving the control signal, the safety controller **112** temporarily ceases the operation of the shuttle-conveyor-based material handling arrangement **102.** Additionally, the in-built firmware may also be configured to analyse the thermal imaging data and the optical imaging data together to detect the presence of the human within the given operational area **108** based on one at least one of: a temperature profile, a motion pattern, identified in the thermal imaging data and the optical imaging data. Upon detecting the presence of the human, the in-built firmware may then be configured to generate the control signal and send the control signal directly to the safety controller **112** in a same manner as discussed hereinabove.

Optionally, when analysing the thermal imaging data and the optical imaging data, the at least one processor **116** is configured to:
for each individual one of the bi-spectrum cameras of said pair, correlate the thermal imaging data and the optical imaging data to detect the presence of the human in the given operational area **108;** and
cross-verify detections corresponding to each individual one of the bi-spectrum cameras of said pair, to confirm the presence of the human in the given operational area **108.**

In this regard, the at least one processor **116** employs a two-layer verification approach to confirm the presence of the human in the given operational area **108.** First, the at least one processor **116** correlates the thermal imaging data and the optical imaging data to align each pair of images in real time and to compare thermal data with corresponding visual data on a pixel-mapped basis. By identifying thermal regions that match a shape, a motion pattern, and a spatial position of an object captured in the optical imaging data, the at least one processor **116** distinguishes an actual presence of the human from a background noise or inanimate heat sources by utilising the optical imaging data. For example, a conveyor motor casing may emit heat, but since its contour and movement pattern remain static, correlated analysis (of the thermal imaging data and the optical imaging data) filters it out, whereas a warm, human-shaped region in both the thermal imaging data and the optical imaging data is retained as a valid detection.

Second, the cross-verification step ensures that the each individual one of the bi-spectrum cameras confirm the same detection event before it is validated as a true positive. The correlation (of the thermal imaging data and the optical imaging data) is made based on coordinates, size, and thermal intensity patterns of the detected objects. When the each individual one of the bi-spectrum cameras reports consistent data within a small positional tolerance, the at least one processor **116** considers the detection as the true positive or a genuine human intrusion detection. However, when results from the each individual one of the bi-spectrum cameras differ significantly, the at least one processor **116** classifies the event as ambiguous and refrains from triggering any safety action until additional frames are captured and analysed in the same manner to confirm a genuine human intrusion detection.

For example, consider a worker momentarily leaning over a given conveyor **110** to adjust the packages. Each individual one of the bi-spectrum cameras captures this activity from a slightly different angle. The at least one processor **116** correlates the thermal imaging data and the optical imaging data for each individual one of the bi-spectrum cameras, detecting a body-temperature signature and an outline of a human torso. Then, through cross-verification, the at least one processor **116** confirms that the each individual one of the bi-spectrum cameras observe same event within the overlapping field of view **106.** The result is a confident detection, resulting in sending the control signal to the safety controller **112** to temporarily cease the operation of the shuttle-conveyor-based material handling arrangement **102.** Conversely, when the each individual one of the bi-spectrum cameras is partially obstructed and only captures a heated box corner, the cross-verification fails, and the at least one processor **116** avoids generating the control signal.

A technical benefit of the aforementioned two-layer verification approach is that it delivers high reliability and resilience against false positives or missed detections of the presence of the human in complex industrial environments. Correlating the thermal imaging data and the optical imaging data ensures accurate differentiation between humans and objects, while cross-verifying detections corresponding to the each individual one of the bi-spectrum cameras provides redundancy and fault tolerance. This prevents accidents caused by undetected presence of the human or unnecessary operational stops, by ensuring that only true presence of the human result in temporarily ceasing the operation of the shuttle-conveyor-based material handling arrangement **102,** thereby improving both safety integrity and operational efficiency.

Optionally, the at least one reference marker (for example, depicted as reference markers **118a** and **118b)** is arranged at the given operational area **108,** and wherein the at least one processor **116** is configured to:
obtain at least one image of the given operational area **108** captured using each individual one of the bi-spectrum cameras of said pair, in a first pre-defined time interval;
for each individual one of the bi-spectrum cameras, detect a position of the at least one reference marker **118a** and **118b** in the at least one image; and
verify that the overlapping field of view **106** of bi-spectrum cameras comprises the given operational area **108,** based on positions of the at least one reference marker **118a** and **118b** in respective images corresponding to each individual one of the bi-spectrum cameras.

The term *"reference marker"* refers to a fixed visual target installed within the given operational area **108** for calibration and alignment of the each individual one of the bi-spectrum cameras. Optionally, the at least one reference marker **118a** and **118b** is implemented as two quick response (QR) codes arranged on the given operational area **108** in such a way that each individual one of the bi-spectrum cameras simultaneously captures them. It will be appreciated that the at least one reference marker **118a** and **118b** serves as a spatial identifier, allowing the at least one processor **116** to confirm that the overlapping field of view **106** of the each individual one of the bi-spectrum cameras remains correctly positioned over an intended monitoring window.

Herein, the term *"first pre-defined time interval"* refers to a recurring duration during which the each individual one of the bi-spectrum cameras captures the at least one image of the operational area in order to verify that the overlapping field of view **106** of the bi-spectrum cameras comprises the given operational area **108.** The first pre-defined time interval is configured to balance responsiveness and computational efficiency, typically ranging from fractions of a second to a few seconds depending on speed of the given conveyor **110** and environmental dynamics around the shuttle-conveyor-based material handling arrangement **102.** By capturing the at least one image within the first pre-defined time interval, the at least one processor **116** ensures continuous verification of consistency of the overlapping field of view **106,** enabling real-time detection of displacement or misalignment of each individual one of the bi-spectrum cameras, while minimising processing overhead.

Optionally, the first pre-defined time interval is approximately same as a frame rate of capturing images using the given bi-spectrum cameras. Optionally, the frame rate of capturing the at least one image (of the given operational area **108)** lies in a range of 30 milliseconds (ms) to 35 ms. In an example implementation, the first pre-defined time interval and the frame rate of capturing the at least one image (of the given operational area **108)** are 33 ms.

Optionally, when detecting the position of the at least one reference marker **118a** and **118b** in the at least one image, the at least one processor **116** employs at least one image processing algorithm. Such image processing algorithms are well-known in the art. When the positions of the at least one reference marker **118a** and **118b** in the respective images lie within the given operational area **108,** it is verified that the overlapping field of view **106** of bi-spectrum cameras comprises the given operational area **108.** Due to different viewing positions of the bi-spectrum cameras, the positions of the at least one reference marker **118a** and **118b** may not exactly coincide in the respective images. However, provided that the positions of the at least one reference marker **118a** and **118b** lie within the given operational area **108,** the overlapping field of view **106** of bi-spectrum cameras comprises the given operational area **108.**

It will be appreciated that when the respective fields of view of the each individual one of the bi-spectrum cameras are misaligned, the at least one reference marker **118a** and **118b** may appear only in the at least one image of the one bi-spectrum camera or at inconsistent positions in the respective images. The at least one processor **116** automatically detects such discrepancies and flags them as a misalignment condition of the at least one reference marker **118a** and **118b.** The system **100** then temporarily cease the operation of the shuttle-conveyor-based material handling arrangement **102,** until a recalibration or a re-positioning of the each individual one of the bi-spectrum cameras is performed automatically/manually such that the at least one reference marker **118a** and **118b** once again appears correctly in the respective images.

Optionally, when verifying that the overlapping field of view **106** of each individual one of the bi-spectrum cameras comprises the given operational area **108,** the at least one processor **116** is configured to receive a plurality of images captured at a frame rate of approximately 33 frames per second (FPS) i.e., when one image is captured every 30 ms. Optionally, in this regard, the at least one processor **116** is configured to analyse the thermal imaging data and the optical imaging data captured by the respective bi-spectrum cameras to detect the position of the at least one reference marker **118a** and **118b** corresponding to a master reference image (for example, comprising a pre-defined QR code pattern). Further, the at least one processor **116** is configured to detect a position of the at least one reference marker **118a** and **118b** in respective images captured by the pair of bi-spectrum cameras, and compare it with a corresponding reference position defined in the master reference image. When any of the respective images deviates from the master reference image, i.e., when the pre-defined QR code pattern appears to be displaced in any of the respective images beyond a permissible tolerance, the at least one processor **116** is configured to generate the control signal and sends the control signal to the safety controller **112.** Upon receiving the control signal, the safety controller **112** temporarily ceases the operation of the shuttle-conveyor-based material handling arrangement **102.** Thus, this ensures real-time verification of alignment of the overlapping field of view **106** of the bi-spectrum cameras and guarantees that any deviation in position of the at least one reference marker **118a** and **118b** in the at least one image, triggers a fail-safe halt of the shuttle-conveyor-based material handling arrangement **102.**

A technical benefit of verifying that the overlapping field of view **106** of bi-spectrum cameras comprises the given operational area **108** is that it ensures optical integrity and spatial synchronisation of the each individual one of the bi-spectrum cameras over time. By continuously monitoring the overlapping field of view **106** based on positions of the at least one reference marker **118a** and **118b** in respective images corresponding to the each individual one of the bi-spectrum cameras, the system **100** prevents an emergence of blind zones that could otherwise allow undetected presence of the human. This improves overall detection reliability, supports consistent safety performance even under mechanical disturbances or environmental changes, and reduces need for frequent manual recalibration, thereby maintaining uninterrupted protection in high-throughput warehouse operations.

Optionally, the at least one processor **116** is configured to perform the step of obtaining the thermal imaging data and the optical imaging data, the step of analysing the thermal imaging data and the optical imaging data, the step of generating the control signal, and the step of sending the control signal, in a second pre-defined time interval.

In this regard, the term *"second pre-defined time interval"* refers to a fix duration of time within which the at least one processor **116** performs the aforesaid steps. The second pre-defined time interval establishes a temporal resolution of the safety controller **112** i.e., how frequently the sending of the control signal and accordingly the temporarily cessation of the operation of the shuttle-conveyor-based material handling arrangement **102** are executed. It will be appreciated that the second pre-defined time interval may be selected based on a speed and a dynamics of the shuttle-conveyor-based material handling arrangement **102,** ensuring that the system **100** reacts swiftly enough to prevent human intrusion and avoid any potential hazards. Optionally, the second pre-defined time interval lies in a range of 100 milliseconds to 200 milliseconds. In an example, the second pre-defined time interval may be 150 milliseconds.

A technical benefit of performing the aforesaid steps in the second pre-defined time interval is that it ensures the system **100** reacts in real time or near-real time to any human intrusion in the operational area. As the at least one processor **116** continuously repeats the aforesaid steps within the second pre-defined time interval, the detection of the human intrusion remains continuous, deterministic, and predictable. This eliminates latency variation between detection of the human intrusion and the temporarily ceasing the operation of the shuttle-conveyor-based material handling arrangement **102,** ensuring that safety action is always triggered at a consistent rate regardless of system **100** load or environmental changes. Furthermore, maintaining the second pre-defined time interval allows the safety controller **112** to monitor an arrival of the control signal from the at least one processor **116** as periodic updates. This assures the at least one processor **116** enables in ceasing the operation of the shuttle-conveyor-based material handling arrangement **102** immediately under either unsafe or uncertain conditions.

Optionally, the at least one processor **116** is configured to send information pertaining to system health to the safety controller **112,** along with the control signal, wherein said information comprises at least one of:
(i) an operational condition of each individual one of the bi-spectrum cameras of said pair,
(ii) a power-drop condition detected by an industrial network switch supplying a power to the plurality of bi-spectrum cameras **104a** and **104b,**
(iii) a communication-link status indicating an availability of a communication path between the at least one processor **116** and the safety controller **112,**
(iv) an alignment status indicating verification that the overlapping field of view **106** of the bi-spectrum cameras comprises the given operational area **108.**

The term *"operational condition"* refers to a working status of the given bi-spectrum camera, indicating whether the given bi-spectrum camera is actively capturing both the thermal imaging data and the optical imaging data or not. The operational condition may cover parameters, for example, such as a power state, a lens integrity, an image transmission rate, a sensor temperature, and the like, of the given bi-spectrum camera. Further, the term *"power-drop condition"* refers to a loss or reduction in the power supply to the plurality of bi-spectrum cameras **104a** and **104b,** for example, detected by the industrial network switch. When a voltage of the power supply drops below a threshold, the industrial network switch automatically transfers operation to another power input and generates a relay signal that is sent to the at least one processor **116.** This mechanism ensures uninterrupted power delivery to the plurality of bi-spectrum cameras **104a** and **104b** and the system **100** even during power fluctuation.

The term *"industrial network switch"* refers to a power distribution unit used for power distribution and monitoring of the plurality of bi-spectrum cameras **104a** and **104b** and may report electrical conditions or connectivity issues to the at least one processor **116.** In case of the power-drop condition at one input of the power supply, the industrial network switch seamlessly transitions to another input of the power supply and sends a feedback signal to the safety controller **112,** ensuring a continuous power supply to the plurality of bi-spectrum cameras **104a** and **104b.**

In an example, during warehouse operations, when the given bi-spectrum camera experiences excessive vibration causing it to lose calibration, the at least one processor **116** detects a misalignment in its capacity to capture the at least one image of the operational area and classifies it as a fault in alignment status. Simultaneously, when a temporary voltage drop occurs at power input feeding through the industrial network switch. The at least one processor **116** logs this as the power-drop condition. Meanwhile, the at least one processor **116** may also detect that it did not receive an acknowledgment from the safety controller **112** for a prior control signal, indicating an issue with the communication-link status. In addition to this, when the at least one reference marker **118a** and **118b** on the given conveyor **110** appears in inconsistent positions on the corresponding image for the each individual one of the bi-spectrum cameras, showing an issue with the alignment status. Thus, indicating a failure of verification that the overlapping field of view **106** of the bi-spectrum cameras comprises the given operational area **108.**

A technical benefit of sending (by the at least one processor **116)** the information pertaining to the system health along with the control signal, to the safety controller **112** is that it establishes a self-monitoring and fail-safe real-time visibility of all critical components of the system **100.** This ensures that the system **100** reacts in real time to the human intrusion, and keeps monitoring continuous and predictable that allows the safety controller **112** to detect any loss of timely updates. This guarantees fail-safe temporarily ceasing the operation of the shuttle-conveyor-based material handling arrangement **102,** and enhances safety integrity, reduces downtime due to undetected component faults, and ensures that entire operation remains verifiable and trustworthy under industrial safety standards.

Optionally, the at least one processor **116** is communicably coupled to the safety controller **112** via a communication adaptor. Herein, the term *"communication adaptor"* refers to an interfacing module that enables transmission of information between the at least one processor **116** and the safety controller **112.** In this regard, the communication adaptor converts, transmits, and synchronises the control signal to ensure error-free and low-latency communication between the at least one processor **116** and the safety controller **112.** The communication adaptor may handle the control signal in both digital form and analog form, and may incorporate hardware-level isolation, buffering, or voltage regulation to protect the at least one processor **116** and the safety controller **112.** It will be appreciated that the communication adaptor is integrated with the safety controller **112,** for example, to be suitably used for high-reliability safety systems used in automated warehouse operations.

Optionally, the communication adaptor may be implemented as a PROFINET gateway module. The PROFINET gateway module facilitates in reliable transmission of the control signal and the system health information from the at least one processor **116** to the safety controller **112** while maintaining electrical isolation, noise immunity, and timing precision required for safety-critical operations. The communication adaptor converts high-level communication protocol of the at least one processor **116** into a signal format (i.e., the control signal) interpretable by the safety controller **112,** thereby guaranteeing that safety instructions and monitoring updates are delivered without delay or loss of integrity of the control signal.

For example, in the shuttle-conveyor-based material handling arrangement **102,** the at least one processor **116** and the safety controller **112** may use different communication interfaces. The at least one processor **116** might send the control signal in an Ethernet-based input, while the safety controller **112** may accept the control signal as a discrete 24 V digital input. The communication adaptor translates the Ethernet-based input from the at least one processor **116** into a discrete 24 V digital signal that the safety controller **112** may interpret as safety commands.

A technical benefit of using the communication adaptor is that it ensures deterministic, low-latency, and interference-resistant transmission of the control signal and the information pertaining to the system health. By using the communication adaptor, the system **100** guarantees that the control signal such as a command to temporarily cease the operation of the shuttle-conveyor-based material handling arrangement **102,** is delivered accurately and within a predictable time frame. This structured nature of the communication adaptor eliminates risk of delays, signal loss, or corruption caused by electrical noise within the control signal that is common in the warehouse operations. Furthermore, the continuous exchange of the control signal through the communication adaptor enables the safety controller **112** to actively monitor an integrity of communication links and detect any interruption as a potential fault condition, ensuring fail-safe operation. As a result, the communication adaptor enhances both the reliability and responsiveness of the system **100,** maintaining synchronised coordination between detection of the human intrusion in the shuttle-conveyor-based material handling arrangement **102,** generation of the control signal, and sending the control signal to the safety controller **112,** in real time.

Optionally, the system **100** further comprises an industrial network switch having a primary power input, a standby power input, and a relay output, wherein the primary power input is connectable to a primary power source, and the standby power input is connectable to a standby power source, and
wherein the industrial network switch is configured to perform at least one of: (i) receiving an operating power from the primary power input during a normal operation of the system **100,** (ii) receiving the operating power from the standby power input, upon occurrence of a power-drop condition or a power-failure condition at the primary power input, wherein the relay output is configured to report the power-drop condition or the power-failure condition to the safety controller **112.**

In this regard, the industrial network switch is connected to the primary power input, the standby power input and the relay output. During the normal operation, the industrial network switch receives the operating power from the primary power input to energise connected subcomponents such as the plurality of bi-spectrum cameras **104a** and **104b** and the communication adaptor. It will be appreciated that the primary power input is implemented as a main power source that feeds the operating power to the industrial network switch. However, upon occurrence of the power-drop condition or the power-failure condition at the primary power input (for example, due to a grid fluctuation/failure), the industrial network switch automatically transitions to the standby power input without disrupting the operating power to the system **100** and its components. This automatic switchover may occur in milliseconds, ensuring that the connected components continue functioning seamlessly. It will be appreciated that the standby power input is implemented as an auxiliary power source or a backup power source that feeds the operating power to the industrial network switch, upon occurrence of the power-drop condition or the power-failure condition at the primary power input. Furthermore, in parallel, the relay output acts as a signal bridge, toggling its output state when the power-drop condition or the power-failure condition is detected, and sends it to the safety controller **112.** This mechanism ensures that even transient power anomalies are detected and addressed before they compromise the detection by the system **100.**

A technical benefit of integrating the industrial network switch with the primary power input, the standby power input and the relay output in the aforesaid manner is that it provides power redundancy and continuous detection of the human intrusion in the shuttle-conveyor-based material handling arrangement **102.** The continuous supply of the operating power ensures to eliminate a risk of shutdown of the plurality of bi-spectrum cameras **104a** and **104b** that could otherwise create blind spots or missed detections of the human intrusion. Furthermore, the relay output enables the safety controller **112** to maintain awareness of all power events, ensuring fail-safe operation and reliability of the system **100,** even under fluctuating conditions of the operating power.

Additionally, optionally, the industrial network switch is configured to provide a Power-over-Ethernet (PoE) supply to the plurality of bi-spectrum cameras **104a** and **104b,** and to maintain the Power-over-Ethernet supply to the plurality of bi-spectrum cameras **104a** and **104b** upon occurrence of a power failure at any one of: the primary power input, the standby power input.

Herein, the term *"Power-over-Ethernet (PoE)"* refers to a technology that allows supplying operating power to a device via an Ethernet data cable in accordance with IEEE 802.3 standards. Thus, the PoE supply maintains uninterrupted supply of the operating power to the plurality of bi-spectrum cameras **104a** and **104b** upon occurrence of the power failure at either the primary power input or the standby power input, ensuring continuous operation of the plurality of bi-spectrum cameras **104a** and **104b.** It will be appreciated that during normal operations, the industrial network switch receives from the primary power input or the standby power input. However, when the power failure occurs at either the primary power input or the standby power input, the industrial network switch automatically transitions to the PoE supply without interrupting supply of the operating power the plurality of bi-spectrum cameras **104a** and **104b.** This is achieved by maintaining a residual charge through internal capacitive buffering and controlled switching circuits, which sustain voltage stability during transition to the PoE supply.

A technical benefit of using the PoE supply for the plurality of bi-spectrum cameras **104a** and **104b** is that it ensures seamless and continuous supply of the operational power, thereby enhancing reliability of the system **100.** Furthermore, maintaining uninterrupted PoE supply during the occurrence of the power failure at either the primary or standby input prevents downtime and preserves safety coverage without manual intervention. This integration guarantees that the system **100** operates continuously, and supporting real-time, fail-safe detection of the human intrusion in the warehouse operations.

Optionally, when analysing the thermal imaging data and the optical imaging data, the at least one processor **116** is configured to restrict detection of the presence of the human within at least one region of interest within the given operational area **108** of the given conveyor **110,** by analysing the thermal imaging data and the optical imaging data that correspond to the at least one region of interest. In this regard, the term *"region of interest"* refers to a specific portion of the given operational area **108** of the given conveyor **110** that is designated by the at least one processor **116** for focused analysis of the thermal imaging data and the optical imaging data. The at least one region of interest corresponds to an exact physical zone within the given operational area **108** where the presence of the human would highly likely result in a safety hazard. It will be appreciated that the at least one region of interest may be defined using spatial coordinates, and may comprise one or more than one discrete area, each mapped within the at least one image of the plurality of bi-spectrum cameras **104a** and **104b.** For example, in the given operational area **108** where the presence of the human is most likely at its loading end near a transfer gate. This area may be marked as the at least one region of interest by defining the spatial coordinates. When the each individual one of bi-spectrum cameras captures the at least one image (having the thermal imaging data and the optical imaging data) of the given conveyor **110,** the at least one processor **116** automatically extracts only the specific portion corresponding to the transfer gate for analysis the thermal imaging data and the optical imaging data.

A technical benefit of restricting the detection of the presence of the human to the at least one region of interest is that it achieves targeted, efficient, and highly reliable detection of the human intrusion without overburdening or exhausting processing resources of the at least one processor **116.** Thus, by analysing the thermal imaging data and the optical imaging data corresponding only to the at least one region of interest, the system **100** reduces computational overhead for the at least one processor **116,** shortens processing and response time, and avoids unnecessary ceasing the operation of the shuttle-conveyor-based material handling arrangement **102.** This ensures that the detection of the human intrusion is confined to a specific zone on the given operational area **108** where intrusion poses real danger, enabling real-time without sacrificing accuracy or system throughput.

Additionally, optionally, the at least one region of interest has a polygonal shape, and wherein the at least one region of interest is configurable by a user via an interactive user interface provided at a display. In this regard, the at least one processor **116** allows configuration of the at least one region of interest in the polygonal shape, providing flexibility to match a geometry of hazardous zones within the operational area. The polygonal shape is represented by a series of connected coordinate points corresponding to a pixel grid of the each individual one of the bi-spectrum cameras, which collectively define an exact spatial contour of the polygonal shape that has to be monitored for the detection of the human intrusion. When the at least one region of interest is configurable by the user, the user may visualise a live feed of the plurality of bi-spectrum cameras **104a** and **104b** and uses the interactive user interface to draw, adjust, or define boundaries of the polygonal shape directly over the captured at least one image. The at least one processor **116** stores a series of connected coordinate points and applies them as spatial filters during subsequent analysis cycles, ensuring that detection of the presence of the human remains confined to the at least one region of interest.

A technical benefit of defining the polygonal shape (of the at least one region of interest) and configuring the at least one region of interest through the interactive user interface provided at the display is that it provides precision, adaptability, and scalability in safely detecting the human intrusion in the shuttle-conveyor-based material handling arrangement **102.** This allows detecting the at least one region of interest to be tailored exactly to physical hazard area, minimising false detections from adjacent or irrelevant spaces while maintaining comprehensive coverage of risk zones. The user-driven configurability of the at least one region of interest also simplifies recalibration and system **100** updates, ensuring that a boundary of the at least one region of interest remain accurate as operational layouts evolve. This enhances both operational flexibility and safety assurance in dynamic warehouse operations where equipment arrangements and workflows frequently change.

Optionally, the at least one processor **116** is configured to:
obtain, from the given bi-spectrum camera, at least one image representing at least one of: a detection of the presence of the human in the given operational area **108,** a manual intervention in the shuttle-conveyor-based material handling arrangement **102;**
store the at least one image in a data repository for a pre-determined retention period; and
upon an expiry of the pre-determined retention period, overwrite at least one previously-stored image with at least one recently-obtained image according to a first-in-first-out (FIFO) policy.

In this regard, the at least one image serves as a visual evidence of safety events within the operational area. Upon receiving the at least one image, the at least one processor **116** stores it in the data repository for the predefined retention period which can be determined by a configuration of the system **100** and may vary depending on a volume of warehouse activity over the given conveyor **110.** When the pre-determined retention period expires, the at least one processor **116** automatically manages the data repository by overwriting the at least one previously-stored image with the at least one recently-obtained image according to the first-in-first-out (FIFO) policy. The FIFO policy refers to a data management approach used by the at least one processor **116** to maintain storage of the at least one image in a sequential and a self-renewing order. Under the FIFO policy, the at least one image is stored in chronological sequence as they are obtained, and when the the pre-determined retention period expires, the at least one previously-stored image is overwritten with the at least one recently-obtained image. Optionally, the pre-determined retention period for the at least one image captured by the each individual one of the bi-spectrum cameras, is one month. For example, when the pre-determined retention period is set to one month, the at least one processor **116** will automatically retain the at least one image captured during the duration of the one month only and begin overwriting the at least one previously-stored image with the at least one recently-obtained image on 31st day (by considering a fact that period of the one month comprises 30 days).

A technical benefit of aforementioned way of storing and overwriting the at least one image captured by the given bi-spectrum camera, is that it enables the system **100** to maintain a verifiable and self-sustaining visual record of all safety-relevant occurrences, including detections of the presence of the human and temporarily ceasing the operation of the shuttle-conveyor-based material handling arrangement **102,** without any need for constant operator monitoring or manual supervision. By automatically storing and then overwriting images on a FIFO basis, the system **100** ensures that storage resources are used efficiently and never overflow. This provides operators with reliable evidence for debugging, auditing, and compliance checks, while minimising memory requirements. It also allows rapid post-event analysis to distinguish genuine intrusions from false triggers, thereby improving reliability of the system **100** and operator trust.

Similarly, additionally, optionally, the at least one processor **116** is configured to:
obtain, from the given bi-spectrum camera, videos representing monitoring of the given operational area **108,** said videos being segmented into pre-defined time intervals;
store the videos in the data repository for the pre-determined retention period; and
upon expiry of the pre-determined retention period, overwrite previously-stored videos with newly-obtained videos according to the FIFO policy.

Optionally, in this regard, the pre-determined retention period for storing the videos in the data repository is two days.

Optionally, the shuttle-conveyor-based material handling arrangement **102** further comprises a shuttle station **114** having an X-Y gantry, and wherein when temporarily ceasing the operation of the shuttle-conveyor-based material handling arrangement **102,** the safety controller **112** is configured to stop movements of both the X-Y gantry and the plurality of conveyors, in response to the control signal. The term *"shuttle station"* refers to a mechanised transfer unit that operates as part of the shuttle-conveyor-based material handling arrangement **102** to move the packages between the plurality of conveyors. The shuttle station **114** typically serves as an intermediate interface between the plurality of conveyors arranged in different orientations or levels, enabling automated loading, unloading, or sorting the warehouse operations. It will be appreciated that the shuttle station **114** may include actuating components such as rollers, lifting platforms, or gripping mechanisms that engage with the packages and position them precisely for onward transfer. The shuttle station **114** functions as a dynamic routing point, coordinating with the plurality of conveyors to facilitate continuous, high-throughput movement of the packages within a warehouse environment.

Herein, the term *"X-Y gantry"* refers to a mechanical unit that enables the shuttle station **114** to move along two perpendicular axes such as along an X-axis (i.e., along a horizontal direction) and along a Y-axis (i.e., along a vertical direction) within a workspace of the system **100.** It will be appreciated that the X-Y gantry may comprise linear guide rails, drive motors, and motion-control assemblies that collectively allow the shuttle station **114** to reach at the given conveyor **110.**

It will be appreciated that when a human enters to the given operational area **108** to retrieve the packages that are jammed on the given conveyor **110,** the at least one processor **116** detects the presence of the human, and the safety controller **112** responds instantly, stopping both gantry motors and conveyor drives to stop the operation of the shuttle station **114** and the X-Y gantry, eliminating risk of accidental contact with the human and the given conveyor **110.** Once the given operational area **108** is clear and no further presence of the human is detected, the operation of the shuttle station **114** and the X-Y gantry may safely resume.

A technical benefit of the aforementioned configuration is that it ensures comprehensive and synchronised cessation of the operation within the shuttle-conveyor-based material handling arrangement **102** during an event of the human intrusion. By ceasing the operation of both the shuttle station **114** and the X-Y gantry simultaneously, the system **100** eliminates partial-motion hazards that might persist when only one subsystem (i.e., either the shuttle station **114** or the X-Y gantry) were stopped. This coordination prevents collisions, crush injuries, or entanglement risks, particularly in high-speed, multi-axis warehouse operations.

Optionally, the at least one processor **116** is configured to display, on an interactive user interface provided at a display, at least one of:
(i) a live status of the shuttle-conveyor-based material handling arrangement **102** and the plurality of bi-spectrum cameras **104a** and **104b,**
(ii) error notifications pertaining to operations of the given bi-spectrum camera and the safety controller **112,**
(iii) stored images and/or videos corresponding to a detection of the presence of the human in the given operational area **108** or a manual intervention in the shuttle-conveyor-based material handling arrangement **102,**
(iv) multi-level access controls to different users for performing different tasks associated with the system **100.**

Herein, the term *"interactive user interface"* refers to an interface that allows the user to monitor an operational state of various components of the system **100.** It will be appreciated that the at least one processor **116** continuously gathers the live status of the shuttle-conveyor-based material handling arrangement **102** and the plurality of bi-spectrum cameras **104a** and **104b.** The live status may include but not limited to a running status or a halted status of the given conveyor **110,** movements of the X-Y gantry, camera activity (such as, a streaming state, a standby state, or a disconnected state), and a network health. The live status is displayed graphically at the display (by the at least one processor **116)** using icons, colour codes, and real-time metrics, allowing the user to immediately assess health and readiness of the system **100.**

Moreover, the at least one processor **116** monitors internal diagnostics of both the given bi-spectrum camera and the safety controller **112** to identify errors and display the error notifications corresponding to the identified errors. The error notifications may include but not limited to hardware faults (e.g., overheating or calibration failure of the given bi-spectrum camera), or communication interruptions between the at least one processor **116** and the safety controller **112,** or a feedback indicating a non-responsive stop relay. Each error notification appears as an alert window or message, containing details such as affected given bi-spectrum camera or the safety controller **112,** timestamp, and a recommended corrective action.

Further, the at least one processor **116** retrieves and displays the stored images and/or the stored videos corresponding to the detection of the presence of the human in the given operational area **108** or the manual intervention in the shuttle-conveyor-based material handling arrangement **102.** The images and/or videos are displayed in accordance with the FIFO policy, allowing the user to verify historical safety events directly from the interactive user interface. Furthermore, the at least one processor **116** manages an access privilege to the different users for performing the different tasks associated with the system **100.** The multi-level access control is defined for the different users such as operators, supervisors, and administrators, in a manner that each level access control is for a user corresponding to task associated with the system **100.** For example, when an operator logs-in using their credentials, the interface allows viewing of live feeds of the given bi-spectrum camera and the system health but restricts access to configuration menus. A supervisor logging in with higher privileges may review recorded evidence of past human intrusions and export event logs. Meanwhile, an administrator may adjust sensitivity of the detection of the human intrusion or redefine shape of the at least one region of interest directly through the interactive user interface.

A technical benefit of using the interactive user interface to display the aforementioned information is that it provides real-time situational awareness, diagnostic insight, and secure system **100** management through an integrated and role-based control platform. The interactive user interface not only enhances safety, transparency and operational efficiency but also ensures that access to safety-critical parameters is strictly regulated. In particular, the multi-level access control ensures that sensitive safety settings are protected from unauthorised or accidental changes, while still allowing qualified personnel to maintain and fine-tune the system **100** as necessary. Consequently, the interactive user interface supports improved system **100** reliability, faster incident response, and robust compliance with industrial safety standards, maintaining both operational continuity and the integrity of safety-critical functions.

Optionally, the safety controller **112** is certified to Performance Level (PL) D, Category 2. The *"performance level D"* is a quantified measure of functional safety performance, defined under an international standard ISO 13849-1, which specifies safety requirements of the safety controller **112** in the warehouse operations. The performance level D represents a high level of risk reduction, meaning that the system **100** is designed for the safety-related measures and validated to reliably prevent hazardous events even in presence of component faults or environmental disturbances. It will be appreciated that the performance level D denotes what level of protection the safety controller **112** provides, i.e., it must be capable of tolerating certain predictable failures without compromising safety. For example, a safety controller **112** certified to the performance level D denotes that safety chain from detection of the presence of the human to command execution by the safety controller **112,** maintains a probability of dangerous failure per hour consistent with PL D classification, typically in a range of micrometres. This ensures that even when one component of the system **100** fails, the system **100** either detects fault immediately or defaults to a safe state by temporarily ceasing the operation of the shuttle station **114** or the X-Y gantry.

The term *"category 2"* refers to a structural and a diagnostic classification under ISO 13849-1 that defines what kind of safety architecture and fault-monitoring approach is implemented within the system **100.** In this regard, category 2 describes a design of the safety controller **112** where safety functions are checked at suitable intervals by automatic tests, meaning that the safety controller **112** periodically performs diagnostic routines to verify correct operation various components of the system **100.**

A technical benefit of implementing the safety controller **112** in compliance with the Performance Level D and the Category 2 requirements is that it ensures the system **100** operates with high reliability, fault tolerance, and continuous self-verification. This means that even when a single component such as the given bi-spectrum camera, or the at least one processor **116** fails or produces an error, the safety controller **112** automatically detects the error and triggers a fail-safe temporarily cessation of the operation of the shuttle-conveyor-based material handling arrangement **102.** This ensures enhanced operational safety, reduced risk of undetected failures, and sustained compliance with industrial safety certifications, reinforcing user confidence in the reliability and robustness of the system **100** during continuous warehouse operations.

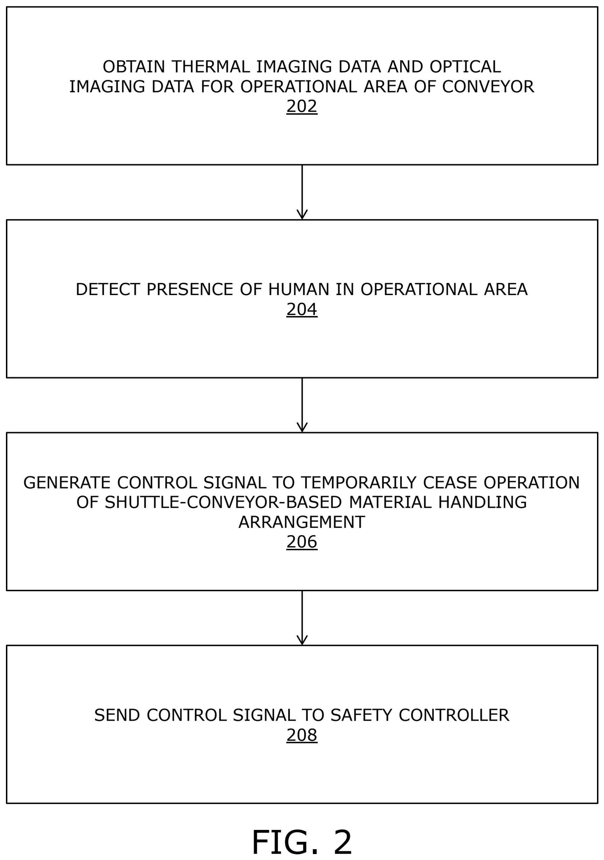

Referring to FIG. 2, illustrated is steps of a method for automated detection of human intrusion in a shuttle-conveyor-based material handling arrangement in warehouse operations, in accordance with an embodiment of the present disclosure. At step **202,** thermal imaging data and optical imaging data are obtained from each individual one of bi-spectrum cameras of a pair from amongst pairs of a plurality of bi-spectrum cameras, wherein the thermal imaging data and the optical imaging data correspond to a given operational area of a given conveyor from amongst a plurality of conveyors, and wherein the bi-spectrum cameras of said pair are arranged in a manner that an overlapping field of view of the bi-spectrum cameras comprises the given operational area, and wherein a given bi-spectrum camera from amongst the plurality of bi-spectrum cameras comprises a thermal imaging channel and an optical imaging channel. At step **204,** the thermal imaging data and the optical imaging data obtained from each individual one of the bi-spectrum cameras of said pair, are analysed to detect a presence of a human in the given operational area. Upon detecting the presence of the human in the given operational area, at step **206,** a control signal is generated to temporarily cease an operation of the shuttle-conveyor-based material handling arrangement. At step **208,** the control signal is sent to a safety controller operatively coupled to the shuttle-conveyor-based material handling arrangement.

The aforementioned steps are only illustrative and other alternatives can also be provided where one or more steps are added, one or more steps are removed, or one or more steps are provided in a different sequence without departing from the scope of the claims herein.

The present disclosure also relates to the method as described above. Various embodiments and variants disclosed above, with respect to the aforementioned first aspect (namely, the system), apply *mutatis mutandis* to the method.

The present disclosure provides the aforementioned method for the automated detection of the human intrusion in the shuttle-conveyor-based material handling arrangement **102** in the warehouse operations, which enables real-time, reliable, and fail-safe monitoring of the given operational area **108** associated with the given conveyor **110** that poses potential safety risks. The method involves obtaining the thermal imaging data and the optical imaging data from the plurality of bi-spectrum cameras **104a** and **104b** arranged in pairs, whereas the each individual one of bi-spectrum cameras having an overlapping field of view **106** covering the operational area of the given conveyor **110.** The method further includes correlating the obtained thermal imaging data and the optical imaging data during analysing to detect the presence of the human, ensuring high detection accuracy while preventing false identifications that might arise from heat-emitting machinery, lighting variations, or reflective surfaces on or around the given conveyor **110.** Upon detecting the presence of the human, the method generates the control signal and transmits to the safety controller **112** operatively coupled to the shuttle-conveyor-based material handling arrangement **102,** which automatically and instantaneously ceases the operation of the shuttle-conveyor-based material handling arrangement **102,** temporarily. This proactive, automated safety response eliminates dependence on manual observation or intervention, ensuring immediate risk mitigation. The method is particularly advantageous in scenarios where the human enters into the operational area to manually address the packages that are stucked or misaligned on the given conveyor **110,** as it prevents accidental collisions or injuries caused by ongoing automated motion. Through this integrated obtaining, analysis, and control process, the method delivers enhanced operator safety, accident prevention, and operational continuity in high-throughput warehouse operations.

Optionally, in the method, the step of analysing the thermal imaging data and the optical imaging data comprises:
correlating the thermal imaging data and the optical imaging data for each individual one of the bi-spectrum cameras of said pair, to detect the presence of the human in the given operational area **108;** and
cross-verifying detections corresponding to each individual one of the bi-spectrum cameras of said pair, to confirm the presence of the human in the given operational area **108.**

Optionally, at least one reference marker **118a** and **118b** is arranged at the given operational area **108,** wherein the method further comprises:
obtaining at least one image of the given operational area **108** captured using each individual one of the bi-spectrum cameras of said pair, in a first pre-defined time interval;
for each individual one of the bi-spectrum cameras, detecting a position of the at least one reference marker **118a** and **118b** in the at least one image; and
verifying that the overlapping field of view **106** of bi-spectrum cameras comprises the given operational area **108,** based on positions of the at least one reference marker **118a** and **118b** in respective images corresponding to each individual one of the bi-spectrum cameras.

Optionally, the method further comprises performing the step of obtaining the thermal imaging data and the optical imaging data, the step of analysing the thermal imaging data and the optical imaging data, the step of generating the control signal, and the step of sending the control signal, in a second pre-defined time interval.

Optionally, the method further comprises sending information pertaining to system health to the safety controller **112,** along with the control signal, wherein said information comprises at least one of:
(i) an operational condition of each individual one of the bi-spectrum cameras of said pair,
(ii) a power-drop condition detected by an industrial network switch supplying a power to the plurality of bi-spectrum cameras **104a** and **104b,**
(iii) a communication-link status indicating an availability of a communication path between at least one processor **116** and the safety controller **112,**
(iv) an alignment status indicating verification that the overlapping field of view **106** of the bi-spectrum cameras comprises the given operational area **108.**

Optionally, in the method, at least one processor **116** is communicably coupled to the safety controller **112** via a communication adaptor.

Optionally, in the method, an industrial network switch has a primary power input, a standby power input, and a relay output, wherein the primary power input is connectable to a primary power source, and the standby power input is connectable to a standby power source, and wherein the industrial network switch is configured to perform at least one of: (i) receiving an operating power from the primary power input during a normal operation of the system **100,** (ii) receiving the operating power from the standby power input, upon occurrence of a power-drop condition or a power-failure condition at the primary power input, wherein the relay output is configured to report the power-drop condition or the power-failure condition to the safety controller **112.**

Optionally, in the method, the industrial network switch is configured to provide a Power-over-Ethernet (PoE) supply to the plurality of bi-spectrum cameras **104a** and **104b,** and to maintain the Power-over-Ethernet supply to the plurality of bi-spectrum cameras **104a** and **104b** upon occurrence of a power failure at any one of: the primary power input, the standby power input.

Optionally, in the method, the step of analysing the thermal imaging data and the optical imaging data comprises restricting detection of the presence of the human within at least one region of interest within the given operational area **108** of the given conveyor **110,** by analysing the thermal imaging data and the optical imaging data that correspond to the at least one region of interest.

Optionally, in the method, the at least one region of interest has a polygonal shape, and wherein the at least one region of interest is configurable by a user via an interactive user interface provided at a display.

Optionally, the method further comprises:
obtaining, from the given bi-spectrum camera, at least one image representing at least one of: a detection of the presence of the human in the given operational area **108,** a manual intervention in the shuttle-conveyor-based material handling arrangement **102;**
storing the at least one image in a data repository for a pre-determined retention period; and
upon an expiry of the pre-determined retention period, overwriting at least one previously-stored image with at least one recently-obtained image according to a first-in-first-out (FIFO) policy.

Optionally, in the method, the shuttle-conveyor-based material handling arrangement **102** further comprises a shuttle station **114** having an X-Y gantry, wherein when temporarily ceasing the operation of the shuttle-conveyor-based material handling arrangement **102,** the safety controller **112** is configured to stop movements of both the X-Y gantry and the plurality of conveyors, in response to the control signal.

Optionally, the method further comprises displaying, on an interactive user interface provided at a display, at least one of:
(i) a live status of the shuttle-conveyor-based material handling arrangement **102** and the plurality of bi-spectrum cameras **104a** and **104b,**
(ii) error notifications pertaining to operations of the given bi-spectrum camera and the safety controller **112,**
(iii) stored images and/or videos corresponding to a detection of the presence of the human in the given operational area **108** or a manual intervention in the shuttle-conveyor-based material handling arrangement **102,**
(iv) multi-level access controls to different users for performing different tasks associated with the system **100.**

Optionally, in the method, the safety controller **112** is certified to Performance Level (PL) D, Category 2.

## Claims

1. A system (100) for automated detection of human intrusion in a shuttle-conveyor-based material handling arrangement (102) in warehouse operations, the shuttle-conveyor-based material handling arrangement comprising a plurality of conveyors, the system comprising:
a plurality of bi-spectrum cameras (104a, 104b) arranged in pairs of bi-spectrum cameras in a manner that an overlapping field of view (106) of bi-spectrum cameras of each pair comprises a given operational area (108) of a given conveyor (110) from amongst the plurality of conveyors, wherein a given bi-spectrum camera from amongst the plurality of bi-spectrum cameras comprises a thermal imaging channel and an optical imaging channel;
a safety controller (112) operatively coupled to the shuttle-conveyor-based material handling arrangement; and
at least one processor (116) communicably coupled to the plurality of bi-spectrum cameras and the safety controller, wherein the at least one processor is configured to:
obtain thermal imaging data and optical imaging data corresponding to the given operational area, from each individual one of bi-spectrum cameras of said pair;
analyse the thermal imaging data and the optical imaging data obtained from each individual one of the bi-spectrum cameras of said pair, to detect a presence of a human in the given operational area;
generate a control signal to temporarily cease an operation of the shuttle-conveyor-based material handling arrangement, upon detecting the presence of the human in the given operational area; and
send the control signal to the safety controller.

2. The system (100) of claim 1, wherein when analysing the thermal imaging data and the optical imaging data, the at least one processor (116) is configured to:
for each individual one of the bi-spectrum cameras (104a, 104b) of said pair, correlate the thermal imaging data and the optical imaging data to detect the presence of the human in the given operational area (108); and
cross-verify detections corresponding to each individual one of the bi-spectrum cameras of said pair, to confirm the presence of the human in the given operational area.

3. The system (100) of any of the preceding claims, wherein at least one reference marker (118a, 118b) is arranged at the given operational area (108), and wherein the at least one processor (116) is configured to:
obtain at least one image of the given operational area captured using each individual one of the bi-spectrum cameras of said pair, in a first pre-defined time interval;
for each individual one of the bi-spectrum cameras, detect a position of the at least one reference marker in the at least one image; and
verify that the overlapping field of view (106) of bi-spectrum cameras comprises the given operational area, based on positions of the at least one reference marker in respective images corresponding to each individual one of the bi-spectrum cameras.

4. The system (100) of any of the preceding claims, wherein the at least one processor (116) is configured to perform the step of obtaining the thermal imaging data and the optical imaging data, the step of analysing the thermal imaging data and the optical imaging data, the step of generating the control signal, and the step of sending the control signal, in a second pre-defined time interval.

5. The system (100) of any of the preceding claims, wherein the at least one processor (116) is configured to send information pertaining to system health to the safety controller (112), along with the control signal, wherein said information comprises at least one of:
(i) an operational condition of each individual one of the bi-spectrum cameras of said pair,
(ii) a power-drop condition detected by an industrial network switch supplying a power to the plurality of bi-spectrum cameras (104a, 104b),
(iii) a communication-link status indicating an availability of a communication path between the at least one processor and the safety controller,
(iv) an alignment status indicating verification that the overlapping field of view (106) of the bi-spectrum cameras comprises the given operational area (108).

6. The system (100) of any of the preceding claims, wherein the at least one processor (116) is communicably coupled to the safety controller (112) via a communication adaptor.

7. The system (100) of any of the preceding claims, further comprising an industrial network switch having a primary power input, a standby power input, and a relay output, wherein the primary power input is connectable to a primary power source, and the standby power input is connectable to a standby power source, and
wherein the industrial network switch is configured to perform at least one of: (i) receiving an operating power from the primary power input during a normal operation of the system, (ii) receiving the operating power from the standby power input, upon occurrence of a power-drop condition or a power-failure condition at the primary power input, wherein the relay output is configured to report the power-drop condition or the power-failure condition to the safety controller (112).

8. The system (100) of claim 7, wherein the industrial network switch is configured to provide a Power-over-Ethernet (PoE) supply to the plurality of bi-spectrum cameras (104a, 104b), and to maintain the Power-over-Ethernet supply to the plurality of bi-spectrum cameras upon occurrence of a power failure at any one of: the primary power input, the standby power input.

9. The system (100) of any of the preceding claims, wherein when analysing the thermal imaging data and the optical imaging data, the at least one processor (116) is configured to restrict detection of the presence of the human within at least one region of interest within the given operational area (108) of the given conveyor (110), by analysing the thermal imaging data and the optical imaging data that correspond to the at least one region of interest.

10. The system (100) of claim 9, wherein the at least one region of interest has a polygonal shape, and wherein the at least one region of interest is configurable by a user via an interactive user interface provided at a display.

11. The system (100) of any of the preceding claims, wherein the at least one processor (116) is configured to:
obtain, from the given bi-spectrum camera, at least one image representing at least one of: a detection of the presence of the human in the given operational area (108), a manual intervention in the shuttle-conveyor-based material handling arrangement (102);
store the at least one image in a data repository for a pre-determined retention period; and
upon an expiry of the pre-determined retention period, overwrite at least one previously-stored image with at least one recently-obtained image according to a first-in-first-out (FIFO) policy.

12. The system (100) of any of the preceding claims, wherein the shuttle-conveyor-based material handling arrangement (102) comprises a shuttle station (114) having an X-Y gantry, and wherein when temporarily ceasing the operation of the shuttle-conveyor-based material handling arrangement, the safety controller (112) is configured to stop movements of both the X-Y gantry and the plurality of conveyors, in response to the control signal.

13. The system (100) of any of the preceding claims, wherein the at least one processor (116) is configured to display, on an interactive user interface provided at a display, at least one of:
(i) a live status of the shuttle-conveyor-based material handling arrangement (102) and the plurality of bi-spectrum cameras (104a, 104b),
(ii) error notifications pertaining to operations of the given bi-spectrum camera and the safety controller (112),
(iii) stored images and/or videos corresponding to a detection of the presence of the human in the given operational area (108) or a manual intervention in the shuttle-conveyor-based material handling arrangement,
(iv) multi-level access controls to different users for performing different tasks associated with the system.

14. The system (100) of any of the preceding claims, wherein the safety controller (112) is certified to Performance Level (PL) D, Category 2.

15. A method for automated detection of human intrusion in a shuttle-conveyor-based material handling arrangement (102) in warehouse operations, the shuttle-conveyor-based material handling arrangement comprising a plurality of conveyors, the method comprising:
obtaining thermal imaging data and optical imaging data corresponding to a given operational area (108) of a given conveyor (110) from amongst the plurality of conveyors, from each individual one of bi-spectrum cameras of a pair from amongst pairs of a plurality of bi-spectrum cameras (104a, 104b), wherein the bi-spectrum cameras of said pair are arranged in a manner that an overlapping field of view (106) of the bi-spectrum cameras comprises the given operational area, and wherein a given bi-spectrum camera from amongst the plurality of bi-spectrum cameras comprises a thermal imaging channel and an optical imaging channel;
analysing the thermal imaging data and the optical imaging data obtained from each individual one of the bi-spectrum cameras of said pair, to detect a presence of a human in the given operational area;
generating a control signal to temporarily cease an operation of the shuttle-conveyor-based material handling arrangement, upon detecting the presence of the human in the given operational area; and
sending the control signal to a safety controller (112) operatively coupled to the shuttle-conveyor-based material handling arrangement.
